Europäisches Patentamt

European Patent Office

Office européen des brevets

(19)

(11) Veröffentlichungsnummer: **0 293 362**
**A2**

(12) # EUROPÄISCHE PATENTANMELDUNG

(21) Anmeldenummer: 88890130.3

(22) Anmeldetag: 25.05.88

(51) Int. Cl.⁴: **B 23 Q 3/157**
**B 23 B 3/06**

(30) Priorität: 26.05.87 AT 1350/87

(43) Veröffentlichungstag der Anmeldung:
**30.11.88 Patentblatt 88/48**

(84) Benannte Vertragsstaaten: **CH DE GB IT LI**

(71) Anmelder: **MASCHINENFABRIK HEID
AKTIENGESELLSCHAFT
Ernstbrunner Strasse 31-33
A-2000 Stockerau (AT)**

(72) Erfinder: **Holy, Franz
Dr. Adolf Schärfstrasse 3
A-2000 Stockerau (AT)**

**Nader, Hans
Leopold Scheidlgasse 13
A-2000 Stockerau (AT)**

(74) Vertreter: **Müllner, Erwin, Dr. et al
Patentanwälte Dr. Erwin Müllner Dipl.-Ing. Werner
Katschinka Postfach 159 Weihburggasse 9
A-1010 Wien (AT)**

(54) Werkzeugmaschine.

(57) Eine Werkzeugmaschine, insbesondere Schrägbettmaschine, verfügt über ein Schlittensystem, dessen Werkzeugschlitten (4) innerhalb eines abschließbaren Arbeitsraumes (5) aus einem Werkzeugmagain (10) mittels einer Übergabeeinrichtung bestückt wird. Der Werkzeugschlitten (4) ist in y-Achsrichtung in Klemmführungen, insbesondere in einer kombinierten Flach-und Prismenführung (12, 13) durch einen Kugelgewindetrieb (14) verfahrbar. Der Werkzeugschlitten (4) hat nur eine einzige Werkzeugaufnahme für ein Dreh-, Bohr- oder Fräswerkzeug mit einer seitlich der Aufnahme angeordneten formschlüssigen Verbindung (20) zu einem Werkzeugantrieb (17). Im Schrägbett (1) ist eine durch eine Tür (11) verschließbare Beladeöffnung (7) zum Durchgreifen der Übergabeeinrichtung vorgesehen. Die Übergabeeinrichtung umfaßt einen Übergabeschieber (8) mit einem schwenkbaren Doppelgreifer (9).

Fig. 2

EP 0 293 362 A2

## Beschreibung

### "Werkzeugmaschine"

Die Erfindung betrifft eine Werkzeugmaschine, insbesondere Schrägbettmaschine, mit einem Schlittensystem, dessen Werkzeugschlitten innerhalb eines abschließbaren Arbeitsraumes aus einem Werkzeugmagazin mittels einer Übergabeeinrichtung bestückbar ist. Werkzeugmaschinen sind im allgemeinen für die Bearbeitung von rotierenden Werkstücken mit stillstehenden Werkzeugen eingerichtet. Es können dabei Dreh- und Bohrwerkzeuge verwendet werden. Wird auf den Werkzeugschlitten ein Antrieb aufgebaut, dann ist auch eine Bearbeitung mit rotierenden Werkzeugen, etwa Fräswerkzeugen, möglich. Diese liegen in der Bearbeitungsebene, wobei ein Vorschub in Längs- und Planrichtung bei dem üblichen Werkzeugmaschinen durchführbar ist. Wenn der Antrieb für das Werkstück eine lagegenaue Winkelverstellung über die Programmsteuerung gestattet, dann kann auch eine Bearbeitung des Werkstückes in Umfangsrichtung erfolgen. Es sind Werkzeugwechselsysteme bekannt, die ein Schnellwechseln von Bohr- und Fräswerkzeugen ermöglichen. Auch zählen Schrägbettmaschinen mit Werkzeugmagazinen, die mit dem Bettschlitten mitfahren oder die stationär angeordnet sind, zum Stand der Technik. Übergabeschieber mit Greifer sorgen dabei für den Austausch der Werkzeuge.

Um eine "echte y-Achse", also eine Bearbeitung eines Werkstückes in y-Richtung zu ermöglichen, sind bei großen Maschinen Werkzeugschlitten bekannt, die auf dem Schlittensystem in Führungen in y-Richtung programmgesteuert verschiebbar sind. Sogenannte Bearbeitungszentren sind zur komplexen spanabhebenden Bearbeitung eingerichtet und verfügen über Mehrfachköpfe zur Bearbeitung, die sowohl feststehende als auch rotierende Werkzeuge aufnehmen können. Dies sind beispielsweise Revolververköpfe, deren Bestückung auch über ein Werkzeugwechselsystem erfolgen kann. Äußerst problematisch und schwierig ist es, bei derartigen Werkzeugmaschinen Kollisionen unter allen Bewegungsabläufen des Belade-, Wechsel- und Bearbeitungsvorganges zu vermeiden. Auch stellen sich Ungenauigkeiten und Bearbeitungsfehler wie auch Schäden an den Werkzeugen ein, die durch den Spänefall im Arbeitsraum verursacht werden.

Die Erfindung zielt darauf ab, eine Werkzeugmaschine zu schaffen, die eine flexible Fertigung unter Ausschaltung der vorerwähnten Nachteile ermöglicht. Dies wird dadurch erreicht, daß der Werkzeugschlitten in y-Achsrichtung auf dem Schlittensystem in Klemmführungen, insbesondere in einer kombinierten Flach- und Prismenführung durch einen Kugelgewindetrieb verfahrbar ist, daß der Werkzeugschlitten eine einzige Werkzeugaufnahme für ein Dreh-, Bohr- oder Fräswerkzeug mit einer seitlich der Aufnahme angeordneten formschlüssigen Verbindung zu einem Werkzeugantrieb aufweist und daß zur Trennung von Arbeitsraum und Magazin eine in den Arbeitsraum führende, das Schrägbett durchsetzende verschließbare Werkeug-Beladöffnung vorgesehen ist, durch welche die Übergabeeinrichtung, insbesondere ein Übergabeschieber mit schwenkbarem Doppelgreifer, hindurchgreift. Durch einen in y-Richtung verfahrbaren Werkzeugschlitten wäre bei herkömmlichen Werkzeugmaschinen die Kollisionsgefahr noch um ein Vielfaches größer, als dies nur bei drehbaren Werkzeugköpfen der Fall ist. Dies trifft auch für die Beeinträchtigung durch Späne zu, die in y-Richtung anfallen und von vorspringenden Teilen, wie Werkzeugköpfen mit Dreh stählen, Bohrstangen oder Fräsern, aufgefangen werden. Aufgrund der erfindungsgemäßen Merkmale befindet sich jeweils nur ein einziges Werkzeug im Arbeitsraum. Damit ergeben sich keine Probleme hinsichtlich eventueller Kollisionen. Die einzige Werkzeugaufnahme ist für Werkzeuge zum Drehen, Bohren und Fräsen geeignet und bei externem Antrieb für die rotierenden Werkzeuge besonders torsionssteif. Dieser Antrieb ist somit außerhalb der Klemmkupplung für Werkzeuge oder Halter angeordnet. Das im Arbeitsraum befindliche Werkzeug kann für eine Bearbeitung auch in der y-Achsenrichtung eingesetzt werden. Es kann durch den Spänefall anderer Werkzeuge nicht beeinträchtigt werden. Letztere befinden sich nicht im Einsatz sondern in einem Werkzeugmagazin, dessen Übergabeeinrichtung durch eine Werkzeug-Beladeöffnung im Schrägbett durchgreift. Durch eine im Rahmen der Programmsteuerung öffnende und schließende Tür wird der Arbeitsraum gegen das Werkzeugmagazin abgeschlossen. Eine weitere Tür kann wie üblich an der Frontseite vorgesehen sein. Damit werden trotz hoher Flexibilität der Maschine Kollisionen wie auch Beeinträchtigungen durch Späne völlig vermieden und eine besonders exakte, störungsfreie und rasche Bearbeitung ist gewährleistet.

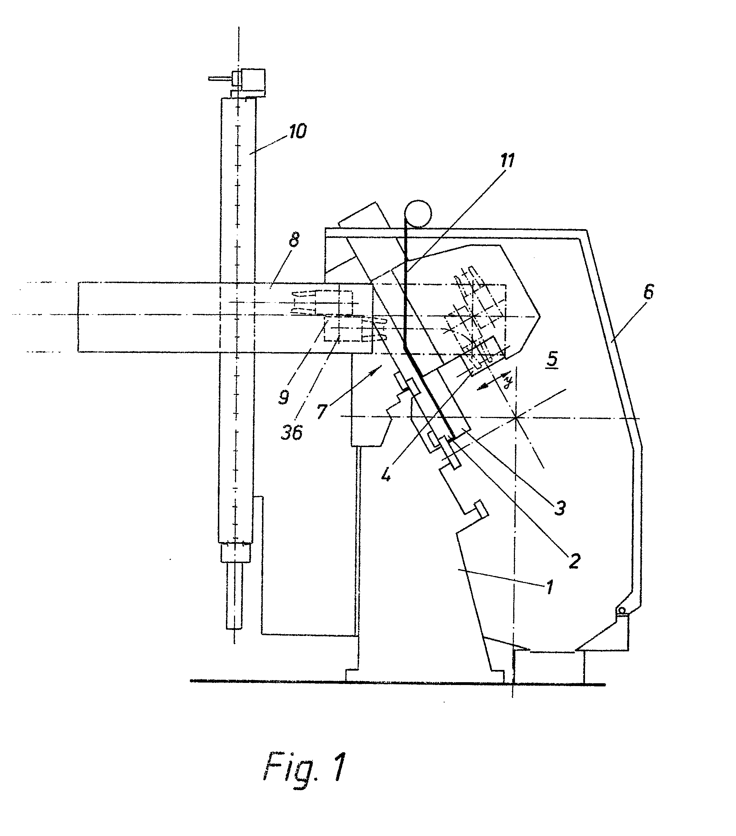

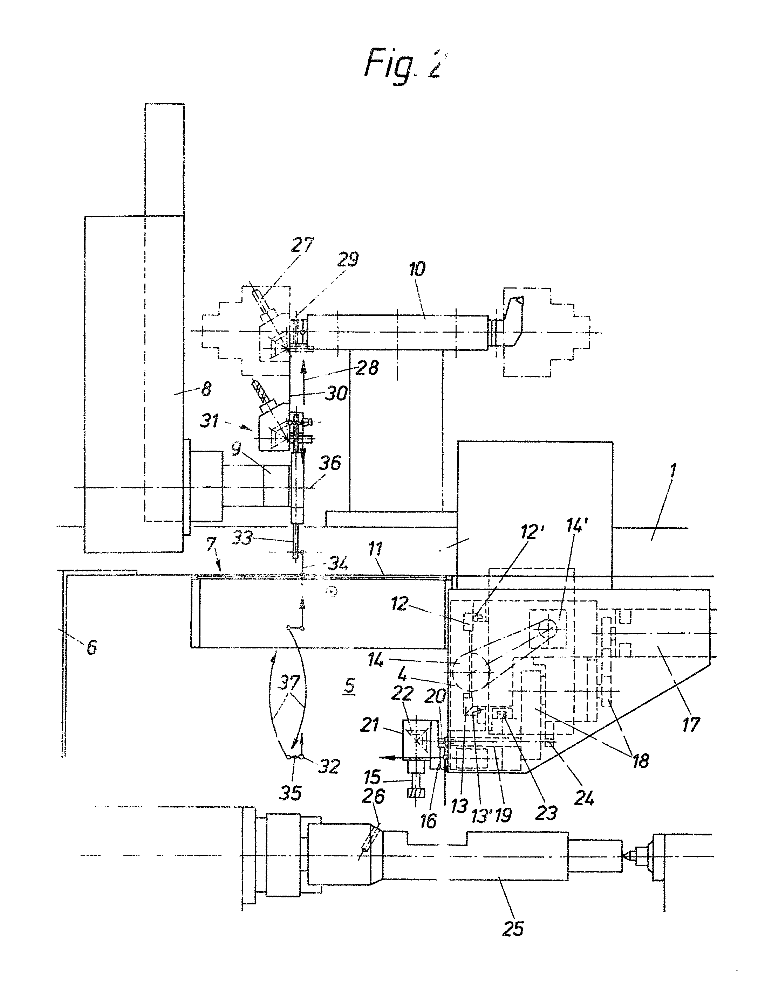

Ein Ausführungsbeispiel des Erfindungsgegenstandes ist in den Zeichnungen schematisch dargestellt. Fig. 1 zeigt eine Schrägbettmaschine mit Werkzeugmagazin im Querschnitt und Fig. 2 eine Ansicht von oben bei geöffnetem Arbeitsraum.

Auf einem Schrägbett 1 einer Werkzeugmaschine gemäß Fig. 1 sind wie üblich Bettschlitten 2, Planschlitten 3 sowie auch ein Schlittensystem mit einem Werkzeugschlitten 4 vorgesehen, der in y-Achsenrichtung verfahrbar ist. Der Arbeitsraum 5 ist frontseitig durch eine Schiebetür 6 verschließbar. Im Schrägbett 1 ist eine Öffnung 7 vorgesehen, durch welche ein Übergabeschieber 8 mit einem Doppelgreifer 9 als Dreh- und Aushubeinheit durchgreift. Ein Werkzeugmagazin 10 ist im Aktionsbereich des Doppelgreifers 9 angeordnet. Die Öffnung 7 kann durch eine Tür 11 bei zurückgezogenem Übergabeschieber 8 verschlossen werden.

Aus Fig. 2 ist die räumliche Anordnung der Baugruppen, wie auch der Aufbau des y-Schlittensystems ersichtlich. Der Werk zeugschlitten (y-Schlitten) 4 gleitet auf den Prismen 12, 13. Es sind der Schlittenführung Klemm- und Dämpfungselemente 12', 13' zugeordnet. Die Verstellung des Schlittens erfolgt programmgesteuert über einen Kugelgewindetrieb 14 mit Antrieb 14'. Ein Fräser 15 ist im Ausführungsbeispiel mittels einer Trennkupplung 16 eines Schnellwechselsystems auf dem Werkzeugschlitten aufgesetzt. Der Antrieb des Fräsers 15 erfolgt durch einen Motor 17 über ein Getriebe 18 zur Antriebswelle 19, die mittels einer formschlüssigen Verbindung 20, beispielsweise ein Ritzel, mit dem Werkzeughalter 21 bzw. dem in diesem vorgesehenen Winkelgetriebe 22 gekuppelt ist. Der Antrieb bzw. die formschlüssige Verbindung 20 setzt seitlich neben der durch die Trennkupplung 16 gebildete Werkzeugaufnahme an. Wird ein stationäres Werkzeug für Drehbearbeitung aus dem Magazin 10 benötigt, dann wird der Werkzeugschlitten 4 durch einen Fixierstift 23 arretiert. Es ist ein unabhängiges lineares Wegmeßsystem 24 vorgesehen.

Wenn in einem Werkstück 25 nach einem Fräsvorgang in y-Achsenrichtung etwa eine Bohrung 26 ausgeführt werden soll, dann ist ein Werkzeugwechsel erfordelrich. Der Wechselvorgang ist in Fig. 2 durch einen Linienzug mit Pfeilen schematisch dargestellt. Vorerst wird das gewünschte Werkzeug 27 im Magazin in die Übergabestellung gebracht. Der Übergabeschieber 8 fährt mit seinem Doppelgreifer 9 in die Magazin-Übergabestellung (Pfeil 28) und erfaßt mit dem einen der beiden Greifer (bzw. den Greiferzangen) das Werkzeug 27, hebt es aus (Pfeil 29) und führt es (Pfeil 30) in die mit vollen Linien dargestellte Warteposition 31. Dieser Vorgang wird noch während der Fräsbearbeitung durch das Werkzeug 15 durchgeführt. Nach Ende der Bearbeitung fährt das Schlittensystem (Bettschlitten 2, Planschlitten 3, y-Schlitten 4) das Werkzeug 15 in die Wechselposition 32. Die Türe 11 wird durch die Programmsteuerung geöffnet und der Übergabeschieber 8 fährt (Pfeil 34) mit dem Doppelgreifer 9 in Arbeitsraum 5. Die freien Zangen 33 fahren über das Werkzeug 15 bzw. dessen Greifpunkt der Trennkupplung 16. Das Werkzeug 15 wird ausgehoben (Pfeil 35). Sodann wird der Doppelgreifer um seine Mittelachse 36 um 180° gedreht (Pfeil 37). Dadurch gelangt das Werkzeug 27 in die Position des Werkzeuges 15. Das Werkzeug 27 wird in die Aufnahme eingeschoben und die Trennkupplung 16 fixiert. Der Doppelgreifer 9 fährt aus dem Arbeitsraum 5, die Türe 11 wird geschlossen. Während das Schlittensystem in die Arbeitsposition für das neue Werkzeug 27 fährt, legt der Doppelgreifer das in den Zangen befindliche Werkzeug 15 im Magazin 10 ab und holt das nach der Programmsteuerung als nächstes benötigte Werkzeug, hebt es aus dem Magazin und bringt es in die Warteposition 31.

## Patentansprüche

Werkzeugmaschine, insbesondere Schrägbettmaschine, mit einem Schlittensystem, dessen Werkzeugschlitten innerhalb eines abschließbaren Arbeitsraumes aus einem Werkzeugmagazin mittels einer Übergabeeinrichtung bestückbar ist, gekennzeichnet durch die Kombination der Merkmale, daß der Werkzeugschlitten (4) in y-Achsrichtung auf dem Schlittensystem in Klemmführungen, insbesondere in einer kombinierten Flach- und Prismenführung (12, 13), durch einen Kugelgewindetrieb (14) verfahrbar ist, daß der Werkzeugschlitten (4) eine einzige Werkzeugaufnahme für ein Dreh-, Bohr- oder Fräswerkzeug mit einer seitlich der Aufnahme angeordneten formschlüssigen Verbindung (20) zu einem Werkzeugantrieb (17) aufweist und daß zur Trennung von Arbeitsraum (5) und Magazin (10) eine in den Arbeitsraum (5) führende, das Schrägbett (1) durchsetzende verschließbare Werkzeug-Beladeöffnung (7) vorgesehen ist, durch welche die Übergabeeinrichtung, insbesondere ein Übergabeschieber (8) mit schwenkbarem Doppelgreifer (9) hindurchgreift.

Fig. 1

Fig. 2

0293362